(19) Europäisches Patentamt
European Patent Office
Office européen des brevets

(11) **EP 1 275 269 B1**

(12) **EUROPEAN PATENT SPECIFICATION**

(45) Date of publication and mention
of the grant of the patent:
**12.10.2016 Bulletin 2016/41**

(21) Application number: **01969023.9**

(22) Date of filing: **10.04.2001**

(51) Int Cl.:
*H04R 5/033* (2006.01)     *H04M 1/19* (2006.01)
*H04M 1/60* (2006.01)     *H04R 3/00* (2006.01)

(86) International application number:
**PCT/GB2001/001597**

(87) International publication number:
**WO 2001/078486 (25.10.2001 Gazette 2001/43)**

(54) **A METHOD OF AUDIO SIGNAL PROCESSING FOR A LOUDSPEAKER LOCATED CLOSE TO AN EAR AND COMMUNICATIONS APPARATUS FOR PERFORMING THE SAME**

VERFAHREN ZUR AUDIOSIGNALSVERARBEITUNG FÜR EINEN LAUTSPRECHER DER SICH IN DER NÄHE DES OHRES BEFINDET UND KOMMUNIKATIONSVORRICHTUNG ZU DESSEN DURCHFÜHRUNG

PROCÉDÉ DE TRAITEMENT D'UN SIGNAL AUDIO POUR HAUT-PARLEUR DISPOSÉ A PROXIMITE D'UNE OREILLE ET APPAREIL DE COMMUNICATION DESTINÉ À METTRE EN OEUVRE LEDIT PROCÉDÉ

(84) Designated Contracting States:
**AT BE CH CY DE DK ES FI FR GB GR IE IT LI LU MC NL PT SE TR**

(30) Priority: **15.04.2000 GB 0009287**

(43) Date of publication of application:
**15.01.2003 Bulletin 2003/03**

(73) Proprietor: **Creative Technology Ltd.
Singapore 609921 (SG)**

(72) Inventor: **SIBBALD, Alastair
Maidenhead,
Berkshire SL6 1XL (GB)**

(74) Representative: **Talbot-Ponsonby, Daniel
Frederick et al
Marks & Clerk LLP
Fletcher House
Heatley Road
The Oxford Science Park
Oxford OX4 4GE (GB)**

(56) References cited:
WO-A-86/02791     GB-A- 2 255 884
US-A- 4 438 525     US-A- 4 694 497
US-A- 5 761 295

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to a method of audio signal-processing for a loudspeaker located close to an ear. The method is especially beneficial for users of communications apparatus such as radio transceivers or telephones, such as for example mobile phones or cellular phones.

There has been a great deal of research on improving the overall quality of telephonic communications. In the early days of telephony this included reducing the intrinsic noise levels in the electro-acoustic transducers and in the transmission lines. A common goal, as described by Leo Beranek (in "The design of speech communication systems", Proc. Inst. Radio Engineers, 35, (1947), pp. 880 - 890, and "Acoustical Measurements", Acoust. Soc. of America/American Institute of Physics (1988 Edition) ISBN 0-88318-590-3), has been to optimise the overall intelligibility of the total transmission system, from the speaker's mouth to the listener's ear. This is especially important for critical applications, such as military command, air-traffic control, and the like. A common strategy has been to remove all extraneous sounds, such as echoes and reflections caused by transmission line feedback.

A feature which seems to have been ignored to date is that the audio signal derived from the telephone handset is effectively anechoic (free from reflected acoustic waves). This is because the microphone is close to the speaker's mouth (at a distance of perhaps two or three cm), compared to the nearby reflecting surfaces such as the room walls, floor and ceiling, which are likely to be several metres distant. Consequently, the waves which are reflected back from these surfaces to the microphone (known as the "indirect" sounds) have travelled much further than the "direct" sounds, which have travelled only several cm, and so their relative intensity is negligibly small.

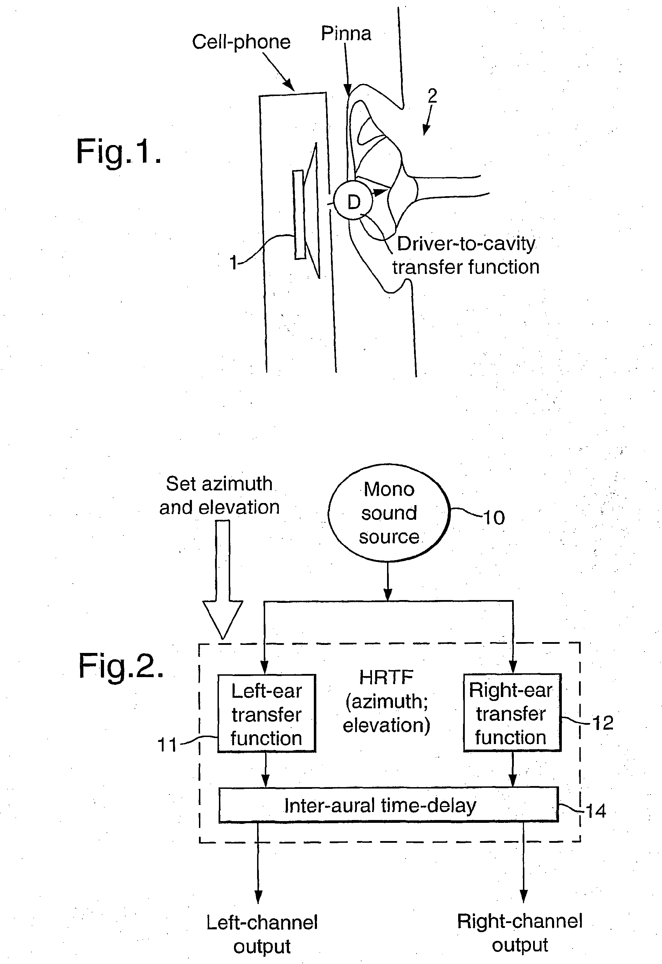

Another feature which occurs in conventional telephony, but which has not drawn any interest previously, is that the listening process is also anechoic. The earpiece section of the handset is held immediately adjacent to the ear, in close contact with the pinna (Figure 1). Thus the sound is transferred directly, with no contact with the pinna (Figure 1). Thus the sound is transferred directly, with no opportunities for reflections to be created and incorporated with the direct sound. This is to be compared with the situation if, for example, the listener were using a speaker phone system, on a desk. In this case the listener would be employing their natural, free-field hearing processes, via both ears, and they would hear sound reflected from the desk surface and scattered from local objects in addition to the direct sound.

Compared with the speaker phone, the use of a handset system close to the ear is unnatural for two reasons: (a) only a single ear is used to audition the sounds, and (b) the listener hears an anechoic source via an anechoic method. The outcome of this is that using a telephone handset (or headphone arrangement) is an unnatural listening experience, which can be uncomfortable and tiring, especially for extended periods of use (such as emergency services operatives and air-traffic control).

In contrast, if a listener were to listen to a real individual speaking, then reflected waves - from the listener's body, from the floor and scattered from local objects - would all be included in the listening process. In present telephonic systems, they are not. As a rule of thumb, "early" reflections and scattered waves of this type generally begin to arrive within a few ms of the direct sounds (sound travels at about 343 ms$^{-1}$ in ambient air: 1 foot per ms), whereas reflected waves from the walls arrive, typically, 10 ms or more after the direct sound.

A telephonic system including reverberation is disclosed in US 5,761,295.

According to a first aspect of the present invention, there is provided a method of audio signal processing as claimed in claims 1 - 5. According to a second aspect of the invention there is provided communications apparatus as claimed in claims 6-11.

Embodiments of the invention will now be described, by way of example only, with reference to the accompanying schematic drawings, in which:-

Figure 1 shows a side elevation of a conventional phone adjacent an ear,
Figure 2 illustrates the component parts of an HRTF,
Figure 3 shows a block diagram of a conventional cell phone,
Figure 4 shows a first embodiment of the present invention,
Figure 5 shows a second embodiment of the present invention,
Figure 6 shows a pair of measured pinna transfer functions,
Figure 7 shows a measured phone to ear transfer function,
Figure 8 shows a differential pinna transfer function,
Figure 9 shows a phone system having parameters adjustable via a keypad, Figure 10 shows a phone system having parameters adjustable via a computer, and
Figure 11 shows the apparatus of Figure 4 integrated with a noise-cancellation system.

The use of "virtualisation" signal processing technologies for stereophonic applications is known, in which the objective is to create the aural illusion that the listener, using headphones, appears to hear a stereo sound-source emanating from an invisible pair of "virtual" loudspeakers in front of him or her. Such systems are described in the article "Out of your Head" by Keith Howard, Hi-Fi News & Record Review, April 2000, p 64 - 67. However, this prior art relates to binaural (two-ear) listening, whereas the present invention relates primarily to monophonic reproduction, in which the listener is hearing sounds from a single loudspeaker adjacent one ear only.

Stereophonic virtualisation is achieved as follows (Figure 2). A monophonic sound source 10 can be digitally processed via a "Head-Response Transfer Function" (HRTF), such that the resultant stereo-pair signal contains 3D-sound cues. These natural sound cues are introduced acoustically by the head and ears when listening to sounds in real life, and they include the inter-aural amplitude difference (IAD), inter-aural time difference (ITD) and spectral shaping by the outer ear. When the resultant stereo signal pair is introduced efficiently into the appropriate ears of the listener (for example by headphones), the original sound is perceived to be at a position in space in accordance with the apparent spatial location of the HRTF pair which was used for the signal-processing. Transaural crosstalk-cancellation is required for loudspeaker playback, but this is not relevant for headphones. Each HRTF comprises three elements: (a) a left-ear transfer function 11; (b) a right-ear transfer function 12, and (c) an inter-aural time-delay 14, and each HRTF is specific to a particular direction in three-dimensional space with respect to the listener. Sometimes it is convenient and more descriptive to refer to the left- and right-ear functions as a "near-ear" and "far-ear" function, according to relative source position.

When the HRTF processing (and crosstalk cancellation if loudspeakers are used) is carried out correctly using high quality HRTF source data, the effects can be quite remarkable. For example, it is possible to move the apparent image of a sound-source around the listener in a complete horizontal circle, beginning in front, moving around the right-hand side of the listener, behind the listener, and back around the left-hand side to the front again. It is also possible to make the sound source move in a vertical circle around the listener, and indeed make the sound appear to come from any selected position in space.

It is worth noting that if the nature of the HRTF data is impaired in any way (as would occur using a badly designed HRTF filter), or if the original HRTF source data is poor (for example, if the ears used to derive the functions had distorted pinnae), then the resultant effects may be severely degraded. Consequently, instead of creating the aural illusion of sounds occurring from a selected point in a three-dimensional space with respect to the listener, the sound image might appear to be vaguely positioned, and even collapse to an "in-the-head" location. It has always been important, therefore, in prior-art systems, to take the utmost care in ensuring that all aspects of the HRTF - (a) the left-ear response; (b) the right-ear response, and (c) the inter-aural time delay - are correctly used in combination to provide the listener with effective sound-source "virtualisation".

Contrary to this prior-art teaching, the inventor has discovered that a monophonic ear-response function (i.e. one-third of the HRTF (11 or 12)) can be used to advantage in monophonic applications, such as for example telephony. Furthermore, many studies of HRTF characterisation and evaluation stress the importance of the presence of detail throughout the audio spectrum (20 Hz to 20 kHz), with most spectral features cited above 5 kHz. The reader is referred to, for example, "Measuring a dummy head in search of pinna cues", H L Han, J. Audio Eng. Soc., Jan/Feb 1994, 42, (1 /2), pp. 15 -36, "Directional sensitivity of sound pressure levels in the human ear-canal", J C Middlebrooks, J Makous and D M Green, J. Acoust. Soc. Am., July 1989, 86, (1), pp. 89 -108, and "The acoustics of the external ear", E A G Shaw, Ch. 6, in Acoustical Factors Affecting Hearing Aid Performance, G A Studebaker and I Hochberg (Eds.), University Park Press, Baltimore (1980), pp. 109 -125.

However, the bandwidth of current telephony systems is relatively restricted (typically 100 Hz to 4 kHz). One might expect, therefore, that the use of HRTFs or ear-response functions with bandwidths limited to less than 25% of the natural spectral range - and especially limited to a region which is not rich in spectral cues-would provide poor and degraded results. The author has discovered that this is not true, and that the use of band-limited (100 Hz to 5 kHz) ear-response transfer functions provides excellent results.

It is generally known that a stereo audio signal can be made to sound more "distant" by the addition of a reverberant signal to the original, but this is usually in a binaural or stereophonic sense. For example, music processors are available as consumer products for adding sound effects to electronic keyboards, guitars and other instruments, and reverberation is a commonly included feature. However, these products create stereophonic output which is fed to both ears of the listener. This means that the brain is supplied with left-right difference information (both in the form of different signals at left and right ears, and also similar signals which arrive at different times at each ear) to create the spatial effect. If these reverberant signals are caused to be monophonic, then the reverberation signal image "collapses" and appears to be located "inside" the head. It might be considered pointless, therefore, to contemplate the use of monophonic reverberation with one single ear to produce any sort of spatial enhancement.

Examples of the use of stereo headphones with HRTFs and reverberation include U.S. 5,371,799, which describes a binaural (two-ear) system for the purpose of "virtualising" one or more sound-sources. The signal is notionally split into a direct wave portion, an early reflections portion and a reverberations portion; the first two are processed via binaural HRTFs, and the latter is not HRTF processed at all. "The reverberation portion is processed without any sound source location information... and the output is attenuated in an exponential attenuator to be faded out".

Another is WO 97/25834, which describes a system for simulating a multichannel surround-sound loudspeaker set-up via headphones. However, this is also a binaural system, in which the individual monophonic channels are processed so as to include signals representative of early reflections, and then filtered using HRTFs so as to become binaural pairs. A reverberation signal is created from all channels and it is added to the final output stage directly, without any HRTF processing, and so the final output is a confusing mixture of HRTF-processed and non-HRTF-processed sounds.

The present invention differs fundamentally from these prior-art examples in that it is not binaural - it is monophonic. Furthermore, it does not incorporate HRTF-processed early reflection simulations.

Rather, the present invention teaches a monaural system, which incorporates (in one embodiment) some reverberant signals processed using ear response transfer functions, such as for example pinna response transfer functions (PTFs), together with further significant features, so as to optimise the audio signals presented to (and transmitted by, if so desired) a cell-phone user.

Further, the invention does not use HRTFs (although it does use ear or pinna response transfer functions), and it can employ transfer functions limited to 25% or less of the audio bandwidth.

The present invention can provide the listener with a much more natural audio signal. The invention can create the aural illusion that the speaker's voice does not appear to be located directly "in-the-ear" (as occurs with present phone units), but that the speaker's voice is situated at a more comfortable distance of, for example, 30 cm or more away. The processed signal is considerably more natural, and is much less tiring to listen to for extended periods of time. It is widely applicable to all telephone systems using handsets or headphones. If desired, the signal processing can be user-controllable such that the apparent distance of the speaker's voice from the ear can be varied.

In a further aspect, the signal processing can be "tuned" by each individual so as to match the physical characteristics of their own, individual ear. Such a system is described in our co-pending patent application number EP 1 058 481, which is hereby incorporated herein by reference. The signal processing can additionally (or alternatively) be used in conjunction with our co-pending patent application number GB 0005334.8 relating to a novel method of noise-cancellation for cell-phones, which is also hereby incorporated herein by reference.

The invention was stimulated by experiments related to the "near-field" phenomenon, which has been described in a previous patent application (WO 99/31938). When a sound-source is to be virtualised at a distance from the listener - say more than one metre - then a "standard" HRTF is used in the signal-processing filters (e.g. an HRTF measured using a sound-source at about 1 metre distance, and with a high-quality artificial head). The relative left- and right-ear response gain factors of such HRTFs are similar, especially at low-frequencies, where they tend to the same asymptote. However, when a sound source moves somewhat closer to the head, say to 0.3 metres distance, then the relative left- and right-ear response gain factors are different (as shown in WO 99/31938), with the nearer ear gain factor being significantly greater relative to that of the distant ear. (We are assuming, for the moment, that the sound source is located to one side of the listener; if it were in the median plane, then of course the gain factors would be equal.) In the extreme, if a sound source were to be located directly adjacent the listener's ear, then the differential L-R gain would be very large, perhaps more than 25 dB.

The inventor has observed that there is an intermediate region, slightly more distant from the ear than the latter example, in which the sound is more comfortable to listen to, but where the far-ear gain is still very low. This is because there is an opportunity for reflected and scattered sound to contribute to the direct sound. For example, if a speaker were situated directly on the right of a listener, at a distance of 0.25 metres, then the far-ear sound would be attenuated by about 13.4 dB with respect to the near-ear sound. The far-ear signal would still be present, therefore, but at a very low-level. Now, however, the listener is hearing a real individual speaking in a local space, such that reflected waves - from the listener's body, from the floor and scattered from local objects - would all be included in the listening process.

Accordingly, the inventor experimented with a monophonic virtualisation system, comprising (a) an outer-ear, or "pinna", transfer function (PTF) representative of a laterally-located sound-source; together with (b) one or more reverberant signals representative of scattered and reverberant sound, processed using one or more pinna transfer functions, and has discovered that a pleasing and comfortable "out-of-the head" effect can be achieved via single-ear phone listening, contrary to all prior expectations.

The invention will now be described in several stages. Embodiment 1 describes the simplest implementation, in which a single pinna transfer function (11, 12) is used, in conjunction with a simple reverberation engine (3). Embodiment 2 describes a similar arrangement, in which dissimilar pinna transfer functions are used for the primary and reverberant sources. Embodiment 3 describes the use of "differential" or "normalised" pinna transfer functions, which optimise the invention for the differing physical acoustic features of different telephone types. Embodiment 4 describes the use of "Virtual Ear" pinna functions which further optimise the invention for the differing physiological features of different users.

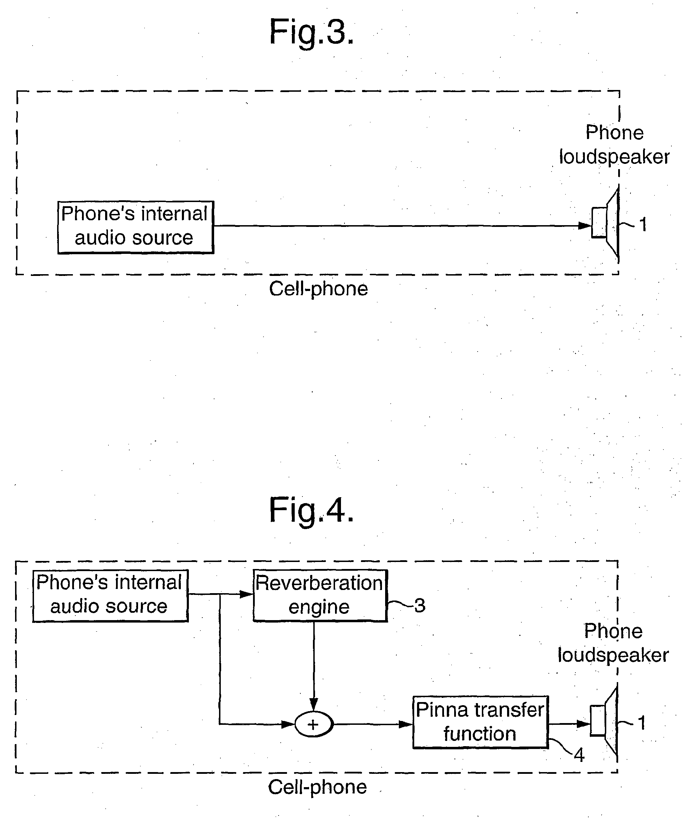

Figure 3 shows a simple block diagram of the audio configuration of a conventional cell-phone, in which the audio from the radio is transferred directly to the loudspeaker (1) for acoustic transmission to the ear (2) of the listener (as in Figure 1). Figure 4 shows a simple embodiment of the present invention. The audio source signal from the radio is fed both to a summing node and a reverberation engine (3). The output from the reverberation engine is also fed to the summing node, where it is added to the original source signal, to provide a signal representative of non-anechoic conditions (as would be heard by a listener in a room, hearing a nearby speaker). The composite signal from the summing node is then filtered by an appropriate pinna transfer function, and fed to the loudspeaker. The pinna transfer function can be one of several variants, but essentially, its purpose is to convolve an outer-ear characteristic on to the audio signal, representative of the listener hearing through his or her own ear, as would occur in the above situation. As described previously, a pinna transfer function is one of the three elements of a Head-Related Transfer Function (HRTF), which comprises two pinna functions (near-ear and far- ear) and an inter-aural time delay. In order to convey the characteristic of a speaker nearby to the side of the listener, it is therefore appropriate to use a near-ear pinna function representative of an azimuth angle of around 90°. An alternative is to create a "diffuse-field" pinna function, by averaging a range of near-ear functions through a range of lateral angles (e.g. from 45° to 135°).

The reverberation engine creates wave scattering and reflection effects, and the pinna function replaces, effectively, the listener's own pinna function which is damped and reduced by the effect of having a phone unit adjacent to the ear. The reverberation engine can be implemented by a number of known, prior-art methods (see for example "Computer models for concert hall acoustics" M R Schroeder, Amer. J. Phys., 1973, 41, pp. 461-471, and "Computer simulation of sound transmission in rooms" M R Schroeder and B S Atal, IEEE Int. Convention Record, 1963, 11, (7), pp. 150-155). It is common practise, for example, to use several signal delay-lines with their outputs cross-linked and fed back to their inputs via slight attenuation, in order to simulate an acoustic wave being reflected back and forth in a room. The output of one or more of the delay lines, or combination thereof, is representative of the original signal as if it had undergone a number of reflections, and the attenuation ensures that the signal magnitude decays in an exponential manner, just as an acoustic wave would appear to diminish as a "reverberant tail". By making such networks more sophisticated, they can be made to appear more realistic in operation. For example, the addition of low-pass filters in the feedback loops is analogous to the preferential absorption of acoustic energy by air at high frequencies, and so on.

The reverberation engine can be adjusted by the user to suit their own preferences. If the relative contribution of the reverberation signal is large compared to the source, then an echoic sound is produced, as if the speaker were several feet or more away. If the reverberation contribution were relatively small compared to the source, then a more intimate sound is produced, as if the listener were close to the ear.

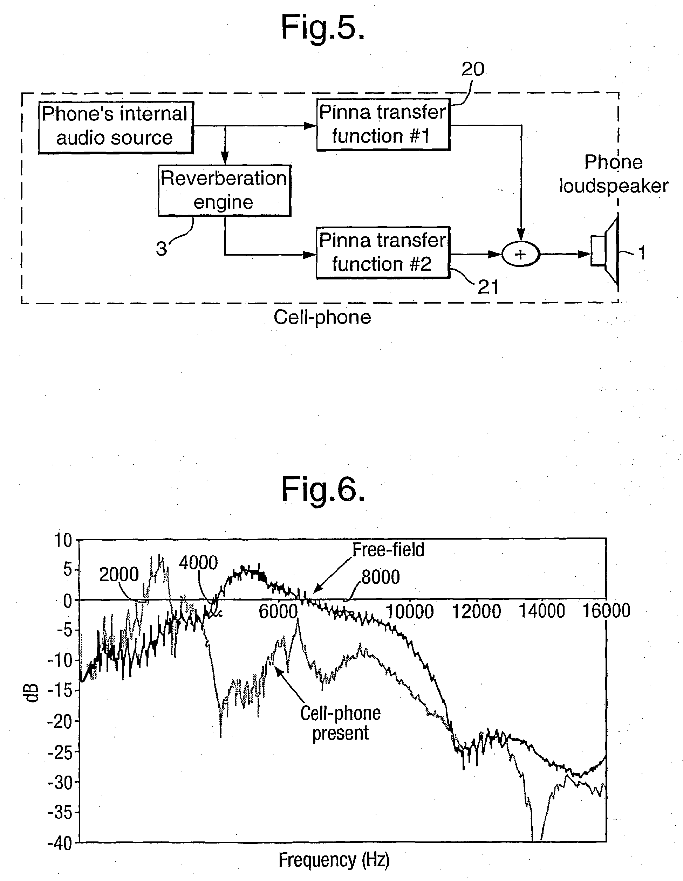

A slightly more sophisticated implementation of the invention is shown in Figure 5. Here, the final summing node receives the audio signal directly from the source via a first pinna transfer function (20), and the output from the reverberation engine via a second pinna transfer function (21). This is more representative of a real situation in which the sound from a laterally-placed speaker is heard from, say, 90°, but some of the reverberant sound and scattered sound arrive from different azimuth (and elevation) angles. The use of a second pinna function helps to make the reverberant sound more perceivable, and improves the overall effect at the expense of some additional signal-processing.

The invention benefits from the use of so-called "differential" (or normalised) transfer functions. For example, when sounds are emitted from a loudspeaker, they are perceived via the listener's own HRTFs (typically ±30° for a stereo configuration). This factor must be removed from the 3D audio synthesis chain, and so it is common to "normalise" or "standardise" the synthesiser HRTFs by dividing them all by the 30° HRTF characteristics. (It is also possible to use other standardisation protocols, such as the 0° HRTF or a diffuse-field HRTF.)

Similarly, when the sounds are transferred acoustically from a phone driver into the ear of the listener (Figure 1), then there are two effects which must be taken into account. First, the natural, acoustic, free-field pinna transfer function for a lateral (say, 90°) source is disturbed by the physical presence of the phone. (This will be substituted, in effect, by the pinna transfer function filtering.) Secondly, the transfer function from the phone driver into the ear ("D" in Figure 1) introduces an additional factor into the delivery of the sound to the listener, and, ideally, must be compensated for.

When a cell-phone or headphone driver unit is held or mounted adjacent to the outer ear, an acoustic cavity is formed. This comprises the major outer-ear cavity (the "concha"), which is partially bounded by the hard, reflective surface of the phone itself. This is especially applicable to "pad-on-ear" type phones, because circumaural types generally tend to dampen the resonance somewhat. The consequence of this is that the headphone driver is coupled to - and driving into - a resonant cavity. The concha cavity will resonate most strongly at several kHz because of its physical dimensions, and hence the incoming audio signal will effectively be boosted at this frequency. However, the resonant properties are dependent entirely on the acoustic attributes of the cavity, and so differing ear-sizes create differing resonant frequencies and "Q"-factors, as does (to a lesser extent) the nature and proximity of the phone surface which bounds the concha.

Figure 6 shows the results of some physical measurements which illustrate the above, and shows a pair of pinna transfer functions (PTFs), which were measured using a B&K type 5930 artificial head. The free-field plot was measured using an impulse method, in which a small loudspeaker placed on-axis to the right ear of the B&K head was used as the sound-source, at 0.6 m distance, so as to substantially avoid standing-wave generation. (This is essentially the "near-ear" response of the 90° HRTF.) Next, a cell-phone (Ericsson type A-1018S) was held to the ear, in just the position that it would be if a user were listening to it. The measurement was repeated, and yielded the second set of characteristics shown in Figure 6. (Both of the Figure 6 plots have been corrected for the loudspeaker colouration; the B&K microphone colouration is negligible.) The effect of partially occluding the concha is clear to see. The cell-phone has disturbed the primary concha resonance, at about 5.5 kHz, creating a new resonant peak at about 2.4 kHz, and there is also some masking of the higher frequencies between 4 kHz and 11 kHz. This indicates how strongly the acoustic transfer functions are dependent on the physical configuration.

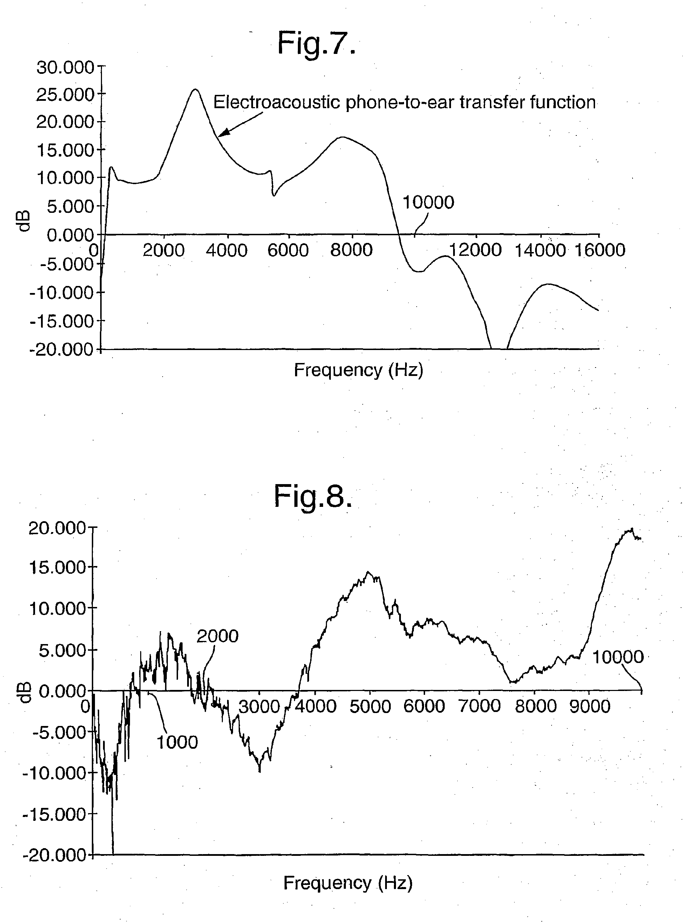

Next, the phone-to ear transfer function must be characterised. Figure 7 shows data from measurements made using a pad on ear type driver unit from a Sony MDR-006 headphone, mounted into a mobile phone structure and held against the pinna of a B&K artificial head. The electroacoustic transfer function was obtained by driving an impulse directly into the phone, and measuring the signal from the relevant artificial head microphone. This is transfer function [D] of Figure 1.

The objective of the invention is to deliver the sound signals to the ear of the listener as if they were hearing lateral, natural sounds via their own pinna function, such as the plot in Figure 6 labelled "free-field". However, in this example the transfer function that the listener is subject to, and actually perceives, is represented by the plot of Figure 7. In order to accomplish the objective, a differential pinna transfer function must be used, which is simply the required transfer function divided by the actual transfer function. In this case, then, as the desired transfer function is the 90° PTF, and the actual transfer function is [D], then:

$$PTF_{DIFFERENTIAL} = \left\{ \frac{PTF_{90^o}}{[D]} \right\}$$

This differential PTF is shown in Figure 8. The above quotient corresponds to a subtraction of the logarithmically scaled plot of Figure 7 from Figure 6 ("free-field"). The frequency scale has been expanded to show only the region from 0 to 10 kHz, as this is practical region of operation bearing in mind the day-to-day physical differences which can occur when placing the phone against the ear, and the present bandwidth limitations of telephony (<4 kHz).

In practise, with many low cost transducers one might expect the electroacoustic transfer function to be much less "smooth" than that shown in Figure 7. Consequently, the differential PTF (Figure 8) might contain somewhat coarser amplitude excursions in the frequency domain. Furthermore, the electroacoustic transfer function will also be dependent on the phone dimensions and structure, and is it is likely that each phone will have slightly different characteristics in this respect. However, these are trivial to measure and program.

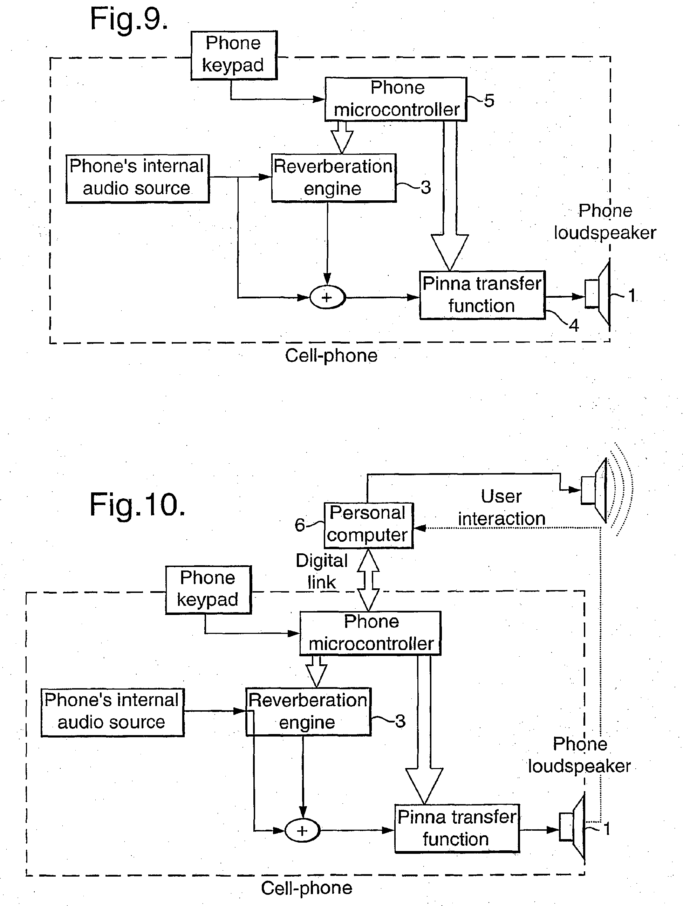

Because the outer-ear dimensions are one of the primary influencing factors in the invention, the PTFs can be "tuned" so as to match each individual's ears, as described in GB 9912530.4. For example, the pinna function of the user might be different from the average value used as default in the signal processing. In this case, the user could select another pinna function from a range of, say, 25 pre-set PTFs, until a satisfactory match was obtained. This could be done by a number of means, ranging from casual listening adjustments, through to a more formal system, in which the phone is connected to a computer which is used to optimise and display the parameters, and then download them into the phone (Figure 10).

Figure 9 shows a block diagram of the invention, in which the cell-phone keypad is arranged so as to adjust the parameters of (a) the reverberation engine, and (b) the pinna transfer function via the cell-phone's internal microcontroller integrated-circuit (5). Both of these adjustments have been referred to previously. The former provides a "speaker distance" factor for the listener, and the latter provides optimal matching to suit the individual's own outer-ear characteristics. In this instance, the simple embodiment of Figure 4 has been used as the basis of the diagram, but the method is equally applicable to more sophisticated embodiments, such as that of Figure 5.

Figure 10 shows a block diagram of a method of adjusting the system for an individual user by means of a personal computer (6). The system is substantially as shown in Figure 9, with the addition of the computer which is connected digitally to the phone's microcontroller, either directly via a serial or parallel cable, or indirectly via radio or optical means. This enables two types of adjustment.

1. The user listens to a computer-generated test signal from the phone loudspeaker, representative of a remote caller, and can adjust the virtualisation parameters to their own preferences.

2. The user listens to a series of computer-generated tones fed alternately to (a) the computer's own loudspeaker(s), and (b) the telephone handset, and then adjusts the PTF (or derivative thereof) such that the handset signals are as similar as possible to the loudspeaker signal. Short, white-noise bursts are suitable for this calibration.

The use of a computer is convenient because it allows much more precise control of adjustment via its mouse and cursor control keys than the small phone keypad, which is also in an inconvenient position very close to the listener's head. In addition, the computer can be used to store individual preferences, and provides a more sophisticated method of interaction with the cell-phone.

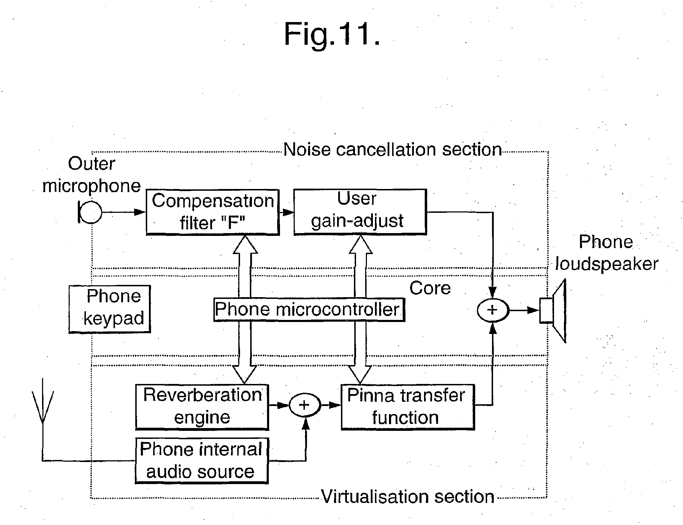

Enhanced ambient noise cancellation can be applied to cell-phones with great advantage, as described in GB 0005334.8. In this case, the relevant signal processing for the present invention can simply be added in conjunction with the present invention. This is shown in Figure 11, in which a cell-phone according to the present invention (e.g. that of Figure 4) is integrated with the noise-cancellation system as described above, in order to show their mutual compatibility. The phone's keypad is shown as the input to the microcontroller, but it is equally

In addition, the computer can be used to store individual preferences, and provides a more sophisticated method of interaction with the cell-phone.

Enhanced ambient noise cancellation can be applied to cell-phones with great advantage, as described in GB 0005334.8. In this case, the relevant signal processing for the present invention can simply be added in conjunction with the present invention. This is shown in Figure 11, in which a cell-phone according to the present invention (e.g. that of Figure 4) is integrated with the noise-cancellation system as described above, in order to show their mutual compatibility. The phone's keypad is shown as the input to the microcontroller, but it is equally applicable to arrange a computer linkage to the microcontroller for more convenient and comprehensive set-up of the various parameters.

The filtering described herein can be carried out either in the analogue domain, using operational amplifiers and known filter configurations, or conveniently in the digital domain using FIR or IIR filters. This latter enables better control and allows user-reconfiguration. It is preferred that filtering corresponds not only to the amplitude characteristics of the pinna (and other) transfer functions, but that is also includes the corresponding phase characteristics. This can be achieved using either FIR filters or IIR filters.

Although the embodiments described have used pad-on-ear type driver units, other types of loudspeaker such as, for example, units adapted to be placed in the ear canal can be used as an alternative.

## Claims

1. A method of audio signal processing for a loudspeaker (1) located close to an ear (2), the method consisting of or including:-

   a) creating a reverberant signal from an original monophonic input signal,
   b) combining the reverberant signal and the input signal to form a combined signal, and
   c) feeding the combined signal to said loudspeaker, thereby providing cues for enabling the listener to perceive the source of the sound of the original monophonic input signal to be located remote from said ear,

   **characterised in that** the method further includes modifying the spectral characteristics of the combined signal using an ear response transfer function.

2. A method of audio signal processing for a loudspeaker (1) located close to an ear (2), the method consisting of or including:-

   a) creating a reverberant signal from an original monophonic input signal,
   b) combining the reverberant signal and the input signal to form a combined signal, and
   c) feeding the combined signal to said loudspeaker, thereby providing cues for enabling the listener to perceive the source of the sound of the original monophonic input signal to be located remote from said ear,

   **characterised in that** the method further includes
   d) modifying the spectral characteristics of said input signal using a first ear response transfer function (20),
   e) modifying the spectral characteristics of the reverberant signal using a further ear response transfer function (21),
   f) combining the modified reverberant signal and the modified input signal to form the combined signal.

3. A method of audio signal processing as claimed in claim 2 in which the first ear response transfer function (20) and the further ear response transfer function (21) are different.

4. A method of audio signal processing as claimed in any preceding claim in which the ear response transfer function(s) consist of pinna transfer functions.

5. A method of audio signal processing as claimed in any preceding claim in which the ear response transfer functions consist of differential pinna transfer functions.

6. Communications apparatus for performing a method as claimed in any one, of claims 1 - 5, including a loudspeaker (1) adapted for use close to an ear (2), the apparatus including signal processing means (3) for adding reverberation to an original monophonic signal to form a combined signal which is fed to said loudspeaker in use, and filter means (4) for implementing an ear response transfer function on said combined signal.

7. Communications apparatus as claimed in claim 6, including or consisting of a mobile phone or cellular phone.

8. Communications apparatus as claimed in claim 6 or 7 including integral control means operable to select the parameters of the added reverberation.

9. Communications apparatus as claimed in claim 6 or 7 including integral control means (5) operable to select the parameters of the pinna transfer function(s).

10. Communications apparatus as claimed in claim 6 or 7 including external control means operable to select the parameters of the added reverberation.

11. Communications apparatus as claimed in claim 6 or 7 including external control means operable to select the parameters of the pinna transfer function(s).

**Patentansprüche**

1. Verfahren zur Audiosignalverarbeitung für einen Lautsprecher (1), der sich in der Nähe eines Ohres (2) befindet, das Verfahren bestehend aus oder umfassend:

a) Erzeugen eines widerhallenden Signals aus einem ursprünglichen monophonen Eingangssignal,
b) Kombinieren des widerhallenden Signals und des Eingangssignals, um ein kombiniertes Signal zu bilden, und
c) Zuführen des kombinierten Signals zu dem genannten Lautsprecher, dadurch Bereitstellen von Reizen, um den Hörer in die Lage zu versetzen, die sich fern von dem genannten Ohr befindliche Schallquelle des ursprünglichen monophonen Eingangssignals wahrzunehmen,

**dadurch gekennzeichnet, dass** das Verfahren ferner das Verändern der Spektraleigenschaften des kombinierten Signals durch Verwendung einer Gehörreaktions-Übertragungsfunktion umfasst.

2. Verfahren zur Audiosignalverarbeitung für einen Lautsprecher (1), der sich in der Nähe eines Ohres (2) befindet, das Verfahren bestehend aus oder umfassend:

a) Erzeugen eines widerhallenden Signals aus einem ursprünglichen monophonen Eingangssignal,
b) Kombinieren des widerhallenden Signals und des Eingangssignals, um ein kombiniertes Signal zu bilden, und
c) Zuführen des kombinierten Signals zu dem genannten Lautsprecher, dadurch Bereitstellen von Reizen, um den Hörer in die Lage zu versetzen, die sich fern von dem genannten Ohr befindliche Schallquelle des ursprünglichen monophonen Eingangssignals wahrzunehmen,

**dadurch gekennzeichnet, dass** das Verfahren ferner Folgendes umfasst
d) Verändern der Spektraleigenschaften des genannten Eingangssignals durch Verwendung einer ersten Gehörreaktions-Übertragungsfunktion (20),
e) Verändern der Spektraleigenschaften des widerhallenden Signals durch Verwendung einer weiteren Gehörreaktions-Übertragungsfunktion (21),
f) Kombinieren des veränderten widerhallenden Signals und des veränderten Eingangssignals, um ein kombiniertes Signal zu bilden.

3. Verfahren zur Audiosignalverarbeitung nach Anspruch 2, in welchem die erste Gehörreaktions-Übertragungsfunktion (20) und die weitere Gehörreaktions-Übertragungsfunktion (21) unterschiedlich sind.

4. Verfahren zur Audiosignalverarbeitung nach einem der vorhergehenden Ansprüche, in welchem die Gehörreaktions-Übertragungsfunktion(en) aus Ohrmuschel-Übertragungsfunktionen besteht/bestehen.

5. Verfahren zur Audiosignalverarbeitung nach einem der vorhergehenden Ansprüche, in welchem die Gehörreaktions-Übertragungsfunktionen aus differenziellen Ohnnuschel- Übertragungsfunktionen bestehen.

6. Kommunikationsvorrichtung zur Durchführung eines Verfahrens nach einem der Ansprüche 1 bis 5, umfassend einen zur Verwendung nah an einem Ohr (2) angepassten Lautsprecher (1), wobei die Vorrichtung Signalverarbeitungsmittel (3) zum Hinzufügen von Widerhall zu einem ursprünglichen monophonen Signal, um ein kombiniertes Signal zu bilden, das dem genannten in Benutzung befindlichen Lautsprecher zugeführt wird, und Filtermittel (4) zur Implementierung einer Gehörreaktions-Übertragungsfunktion an dem genannten kombinierten Signal umfasst.

7. Kommunikationsvorrichtung nach Anspruch 6, umfassend ein oder bestehend aus einem Mobiltelefon oder Zellulartelefon.

8. Kommunikationsvorrichtung nach Anspruch 6 oder 7, umfassend integrale Steuerungsmittel, die betreibbar sind, um die Parameter des hinzugefügten Widerhalls auszuwählen.

9. Kommunikationsvorrichtung nach Anspruch 6 oder 7, umfassend integrale Steuerungsmittel (5), die betreibbar sind, um die Parameter der Ohrmuschel-Übertragungsfunktion(en) auszuwählen.

**10.** Kommunikationsvorrichtung nach Anspruch 6 oder 7, umfassend externe Steuerungsmittel, die betreibbar sind, um die Parameter des hinzugefügten Widerhalls auszuwählen.

**11.** Kommunikationsvorrichtung nach Anspruch 6 oder 7, umfassend externe Steuerungsmittel, die betreibbar sind, um die Parameter der Ohrmuschel-Übertragungsfunktion(en) auszuwählen.

## Revendications

**1.** Procédé de traitement d'un signal audio pour un haut-parleur (1) situé près d'une oreille (2), le procédé étant constitué par ou englobant les étapes ci-dessous :

a) formation d'un signal réverbérant à partir d'un signal d'entrée monophonique original ;
b) combinaison du signal réverbérant et du signal d'entrée pour former un signal combiné ; et
c) transmission du signal combiné vers ledit haut-parleur, fournissant ainsi des marques pour permettre à l'auditeur de percevoir la source du son du signal d'entrée monophonique original comme étant située en un point éloigné de ladite oreille ;

**caractérisé en ce que** le procédé comprend en outre l'étape de modification des caractéristiques spectrales du signal combiné en utilisant une fonction de transfert de réponse de l'oreille.

**2.** Procédé de traitement d'un signal audio pour un haut-parleur (1) situé près d'une oreille (2), le procédé étant constitué par ou englobant les étapes ci-dessous :

a) formation d'un signal réverbérant à partir d'un signal d'entrée monophonique original ;
b) combinaison du signal réverbérant et du signal d'entrée pour former un signal combiné ; et
c) transmission du signal combiné audit haut-parleur, fournissant ainsi des marques pour permettre à l'auditeur de percevoir la source du sein du signal d'entrée monophonique original comme étant située en un point éloignée de ladite oreille,

**caractérisé en ce que** le procédé englobe en outre les étapes ci-dessous :

d) modification des caractéristiques spectrales dudit signal d'entrée en utilisant une première fonction de transfert de réponse de l'oreille (20) ;
e) modification des caractéristiques spectrales du signal réverbérant en utilisant une fonction de transfert de réponse d'oreille additionnelle (21) ;
f) combinaison du signal réverbérant modifié et du signal d'entrée modifié pour former le signal combiné.

**3.** Procédé de traitement d'un signal audio selon la revendication 2, dans lequel la première fonction de transfert de réponse de l'oreille (20) et la fonction de transfert de réponse de l'oreille additionnelle (21) sont différentes.

**4.** Procédé de traitement d'un signal audio selon l'une quelconque des revendications précédentes, dans lequel la (les) fonctions(s) de transfert de réponse de l'oreille sont des fonctions de transfert du pavillon de l'oreille.

**5.** Procédé de traitement d'un signal audio selon l'une quelconque des revendications précédentes, dans lequel la (les) fonction(s) de transfert de réponse de l'oreille sont constituées par des fonctions de transfert du pavillon de l'oreille différentielles.

**6.** Appareil de communication pour exécuter un procédé selon l'une quelconque des revendications 1 à 5, englobant un haut-parleur (1)-) adapté pour être utilisé près d'une oreille (2), l'appareil englobant un moyen de traitement de signaux (3) pour ajouter une réverbération à un signal monophonique original afin de former un signal combiné transmis vers ledit haut-parleur en service, et un moyen de filtrage (4) pour mettre en oeuvre une fonction de transfert de réponse de l'oreille sur ledit signal combiné.

**7.** Appareil de communication selon la revendication 6, englobant ou constitué par un téléphone mobile ou un téléphone cellulaire.

**8.** Appareil de communication selon les revendications 6 ou 7, englobant un moyen de commande intégral (5) destiné à sélectionner les paramètres de la réverbération ajoutée.

**9.** Appareil de communication selon les revendications 6 ou 7, englobant un moyen de commande intégral (5) destiné à sélectionner les paramètres de la (des) fonction(s) de transfert du pavillon de l'oreille.

**10.** Appareil de communication selon les revendications 6 ou 7, englobant un moyen de commande externe, destiné à sélectionner les paramètres de la réverbération ajoutée.

**11.** Appareil de communication selon les revendications 6 ou 7, englobant un moyen de commande externe, destiné à sélectionner les paramètres de la (des) fonction(s) de transfert du pavillon de l'oreille.

Fig.1.

Cell-phone   Pinna

2

D

Driver-to-cavity
transfer function

1

Fig.2.

Set azimuth
and elevation

Mono
sound
source

10

HRTF
(azimuth;
elevation)

Left-ear
transfer
function

11

Right-ear
transfer
function

12

Inter-aural time-delay

14

Left-channel
output

Right-channel
output

# Fig.3.

```
┌ ─ ─ ─ ─ ─ ─ ─ ─ ─ ─ ─ ─ ─ ─ ─ ─ ─ ─ ┐
│                                   Phone │
│                              loudspeaker │
│  ┌──────────────┐                       │
│  │Phone's internal│──────────────────▷ ◁├─ 1
│  │ audio source │                       │
│  └──────────────┘                       │
└ ─ ─ ─ ─ ─ ─ ─ ─ ─ ─ ─ ─ ─ ─ ─ ─ ─ ─ ┘
              Cell-phone
```

# Fig.4.

```
┌ ─ ─ ─ ─ ─ ─ ─ ─ ─ ─ ─ ─ ─ ─ ─ ─ ─ ─ ─ ┐
│ ┌──────────────┐   ┌──────────────┐     │
│ │Phone's internal│──▶│Reverberation │ ⌐3 │
│ │ audio source │  │ │   engine     │    │
│ └──────────────┘  │ └──────────────┘    │  Phone
│                   │        │            │ loudspeaker
│                   │        ▼            │
│                   └───▶( + )────▶┌──────────────┐      │
│                                  │Pinna transfer│──▶◁├─ 1
│                                  │  function    │    │
│                                  └──────────────┘ ⌐4 │
└ ─ ─ ─ ─ ─ ─ ─ ─ ─ ─ ─ ─ ─ ─ ─ ─ ─ ─ ─ ┘
              Cell-phone
```

# Fig.5.

Cell-phone

# Fig.6.

Frequency (Hz)

# Fig.7.

Electroacoustic phone-to-ear transfer function

# Fig.8.

# Fig.9.

Cell-phone

# Fig.10.

Cell-phone

# Fig.11.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5761295 A
- US 5371799 A
- WO 9725834 A
- EP 1058481 A
- GB 0005334 A
- WO 9931938 A
- GB 9912530 A

### Non-patent literature cited in the description

- The design of speech communication systems. Proc. Inst. Radio Engineers. 1947, vol. 35, 880-890
- Acoustical Measurements. Acoust. Soc. of America. American Institute of Physics, 1988
- **KEITH HOWARD.** Out of your Head. *Hi-Fi News & Record Review,* April 2000, 64-67
- **H L HAN.** Measuring a dummy head in search of pinna cues. *J. Audio Eng. Soc.,* January 1994, vol. 42 (1 /2), 15-36
- **J C MIDDLEBROOKS ; J MAKOUS ; D M GREEN.** Directional sensitivity of sound pressure levels in the human ear-canal. *J. Acoust. Soc. Am.,* July 1989, vol. 86 (1), 89-108
- The acoustics of the external ear. **E A G SHAW.** Acoustical Factors Affecting Hearing Aid Performance. University Park Press, 1980, 109-125
- **M R SCHROEDER.** Computer models for concert hall acoustics. *Amer. J. Phys.,* 1973, vol. 41, 461-471
- **M R SCHROEDER ; B S ATAL.** Computer simulation of sound transmission in rooms. IEEE Int. Convention Record, 1963, vol. 11, 150-155